⑲ ·Europäisches Patentamt

European Patent Office

Office européen des brevets

(11) Publication number: **0 121 955**
**B1**

(12) **EUROPEAN PATENT SPECIFICATION**

(45) Date of publication of patent specification: **29.04.87**

(21) Application number: **84200263.6**

(22) Date of filing: **24.02.84**

(51) Int. Cl.⁴: **G 07 D 7/00, G 01 B 11/30**

(54) **Apparatus for document recognition by modulated reflected light.**

(30) Priority: **11.03.83 NL 8300892**

(43) Date of publication of application:
**17.10.84 Bulletin 84/42**

(45) Publication of the grant of the patent:
**29.04.87 Bulletin 87/18**

(84) Designated Contracting States:
**AT BE CH DE FR GB IT LI LU NL SE**

(56) References cited:
**AT-B- 342 901**
**GB-A-2 025 041**
**NL-A-7 410 463**
**US-A-3 753 617**
**US-A-4 092 068**
**US-A-4 146 330**

(73) Proprietor: **DE NEDERLANDSCHE BANK N.V.**
**P.O. Box 98**
**NL-1000 AB Amsterdam (NL)**

(72) Inventor: **Klumper, Jan Willem**
**Raadhuisstraat 69**
**NL-2751 AW Moerkapelle (NL)**
Inventor: **Hardenbol, Abraham Gerrit**
**Sering 6**
**NL-2671 NL Naaldwijk (NL)**
Inventor: **Jansen, Hendrikus Leonie Alphons Maria**
**Beukenlaan 141**
**Bleiswijk (NL)**
Inventor: **Kleinloog, Johan Willem**
**Latijns Amerikalaan 84**
**NL-2262 BD Delft (NL)**

(74) Representative: **Kooy, Leendert Willem et al**
**OCTROOIBUREAU VRIESENDORP & GAADE**
**P.O. Box 266**
**NL-2501 AW The Hague (NL)**

Courier Press, Leamington Spa, England.

## Description

The invention relates to an apparatus for document recognition comprising a conveyor means for continuous conveyance of documents being oriented in a predetermined direction along a predetermined path, a light source, an optical system for focussing a light beam from the light source onto a predetermined location in a flat portion of said path, two light detectors each of which being directed to said predetermined location, and a signal processing means for the light detector output signals.

Such an apparatus is known from patent specification US—A—3 753 617. The known apparatus is designed for document recognition from a certain surface roughness. In the known apparatus one light detector is arranged for sensing diffused light being directed along the normal and the other light detector is arranged for sensing at the angle of incidence reflected light obliquely incident from the light source. In the signal processing means of the known apparatus the output signals of the two detectors are correlated. The result of this correlation is the basis for a decision as to recognition of a document.

From patent specification US—A—4 092 068 is known a surface analyser capable of extracting information relating to the topography of a travelling surface, in particular the geometry and reflectivity, e.g. roughness and dirt of a paper web. In the known apparatus a light beam is incident substantially perpendicularly onto the travelling surface and two light detectors are directed to said surface at an angle of 20—70° to the normal, whereby the principal axis of each of the light detectors are arranged in a plane perpendicular to said surface and parallel to the direction of conveyance. A signal processing means processes the output signals of the light detectors to make up a difference signal and a sum signal, the sum signal indicating only changes in reflectivity and the difference signal indicating only geometrical changes.

According to the present invention an apparatus according to the first part of claim 1 is characterized in that said light beam is incident at least substantially perpendicularly onto the predetermined location in said flat path portion and that the light detectors are directed to said flat path portion at an angle of at least 50° to the normal, the principal axis of each of the light detectors being arranged in a plane perpendicular to said flat path portion and parallel to the direction of conveyance, and in that the said processing means processes the output signals of the light detectors to make up a quotient signal and a sum signal, and then compares the two signals to each other.

Advantageously the apparatus according to the invention eliminates changes in reflectivity caused by dirt on documents and also eliminates changes in light intensity of the source by making up a quotient signal.

Advantageously the apparatus according to the invention is used for recognizing documents from a line pattern in intaglio printing thereon when transferring the documents such that the direction of transfer is intersecting the pattern lines at a considerable angle.

Advantageously the apparatus according to the invention is further characterized in that underneath the said flat portion in said path a light diffuing member is arranged in the form of a transparent and plano-parallel plate, its cross-section according to the direction of conveyance and perpendicular to said flat path portion being an isosceles trapezium having its legs intersecting the principal axes of the respective light detectors, wherein the short face of said light diffusing member is frosted, the light beam being incident perpendicularly onto the long face of said light diffusing member.

A further measure contributing to the automatic operation of the apparatus is the presence of an edge detector in the said flat path portion, said signal processing means being arranged for control by an output signal of the edge detector in order to discriminate, when prompted by the edge detector output signal, detector output signals as effected by said light diffusing member, and to utilize said detector output signals for automatic signal level adjustment.

The apparatus according to the invention enables the recognition of very fine intaglio line patterns when the light source comprises a laser.

It was found that the apparatus according to the invention is uniquely suitable for digital processing the light detector output signals to produce a real time decision as to recognition of a document, whereby the signal processing means is implemented as an interface with the external data bus of a digital computer while maintaining a transfer velocity of the documents in the flat path portion amounting to 4 meters per second, for example.

The invention is further explained in the following description of a preferred embodiment with reference to the drawings.

Fig. 1 is a diagrammatic view of the embodiment according to the invention.

Fig. 2 is a graph showing the dependence in time of detector output signals in various processing stages.

Fig. 3 is a schematic diagram of a signal processing means in the embodiment of apparatus according to the invention.

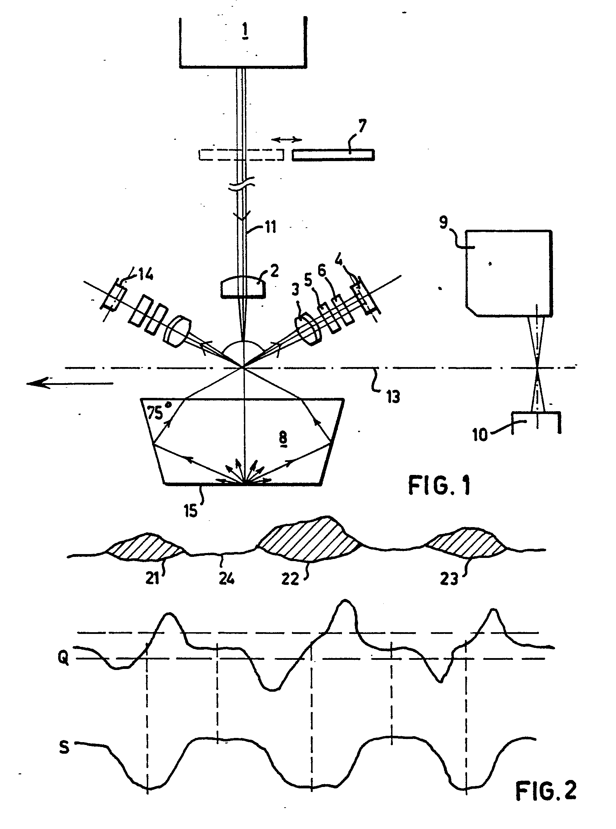

In the apparatus shown in Fig. 1 a light source 1 illuminates a narrow strip in the flat path portion 13 of the conveyor means through a cylinder lens 2. The narrow strip is oriented perpendicularly to the direction of conveyance of the conveyor (and perpendicularly to the plane of the drawing).

At both sides of light beam 11 light detectors 4, 14 are arranged symmetrically at an angle of 60° to the normal along which light beam 11 is incident onto flat path portion 13. An optical system with an objective 3 collects diffused light from the flat path portion 13 wherein a document to be tested is present or not. When no light diffusing document is present in said flat path portion at the spot where the light beam is incident, diffused light is collected from a light diffusing member 8.

The light diffusing member is a transparent and plano-parallel plate, its cross-section in the direction of conveyance of the documents in the flat path portion 13, being shaped like an isosceles trapezium.

The dimensions of the plate and the distance between plate and conveyor path have been selected such that light being reflected internally at the bevelled edges, is incident into light detector 4 through optical system 3. Light beam 11 incident from the light source into light diffusing member 8, is diffused at frosted short face 15 of plate 8. Both acute angles in the trapezium-shaped cross-section are angles of 75°, for example.

A gray filter 7 may be arranged in the path of light beam 11 for an overall adjustment of its intensity. In each of the optical systems collecting diffused light for a light detector respectively, a light filter 5, 6 with limited transmission band may be arranged to bar undesired light from entering the respective light detector.

The apparatus comprises an edge detector including a light switch 9 and a reflector 10. The instant at which light switch 9 detects an interruption, is determinant for automatic signal processing in the signal processing means. This instant discriminates between a calibration by means of detected diffused light from light diffusing member 8 and a registration for document recognition, for example.

In the described configuration when scanning an intaglio line pattern on a document, signal wave forms are being produced as shown in Fig. 2. On the top line in Fig. 2 the outline of a cross-section of an intaglio line pattern on a paper surface is drawn. The ink lines 21, 22 and 23 form embossments above the paper surface 24 which is somewhat deformed at the spot by a depression. It is assumed that the ink has a greater absorption of light than the paper surface. By scanning the lines from the left to the right the quotient signal Q and the sum signal S are respectively produced by appropriately processing both output signals from the two detectors in the signal processing means. The high inclination setting of the detectors effects that diffused light from directly behind an intaglio line cannot reach the detector. On the other hand an increased amount of diffused light reaches the detector from a slope of the intaglio line which is in full view of the detector. The result is a more detailed quotient signal wave form with a repetition of a series of minima and maxima.

Whether there is question of intaglio lines or embossments can be found by comparing quotient signal Q with sum signal S. Sum signal S has a minimum where the incident light beam is reflected off an ink line, because it is assumed that the reflectance of the paper substrate is greater than the reflectance of the ink used. In case the center of the positive rising edge in a quotient signal approximately coincides with a minimum in the associated sum signal the relief of the ink lines is positive in the said configuration; the ink lines form an embossment. Comparable rules apply to inversions of the operative configuration. For example by reversing the scanning direction the center of a negative falling edge will coincide with a minimum in the associated sum signal if the ink lines are in positive relief or embossment and the ink has smaller reflectance than the paper substrate. To evaluate whether there is question of a positive relief or embossment it appears feasible to draft a simple algorithm that is an algorithm with a short execution time.

The fineness of the line pattern and the width of the narrow illuminated strip are attuned to each other to create good working conditions for the apparatus. The width of the narrow illuminated strip is advantageously smaller than the effective width of an ink line and that is the reason why a laser is used as light source in the apparatus.

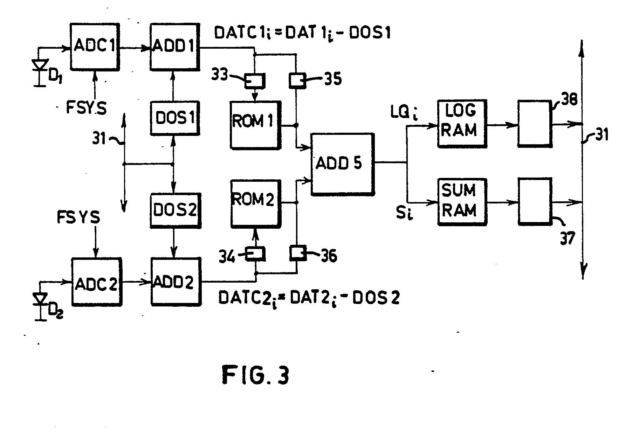

The signal processing means is diagrammatically shown in Fig. 3. The output signals produced in the light sensitive diodes D1 and D2 respectively, are respectively fed to an A/D converter ADC1, ADC2 controlled by a clock signal FSYS.

From an external data bus 31 the current calibration values (dark current) of the respective diodes are stored in two buffers DOS1 and DOS2 which values are deducted in an adder ADD1, ADD2 respectively, from the digitized diode output signals. These operations yield the corrected digital output signal samples

$$DATC1_i = DAT1_i - DOS1 \text{ and}$$

$$DATC2_i = DAT2 - DOS2$$

which are subsequently processed in two time periods. There is here question of the signal samples in a predetermined time window fitting over or in the line pattern to be examined as guided by the output signal of the edge detector.

In a first time period within a FSYS-clock pulse repetition time that is determined by the central processor through buffers 33, 34 respectively, each of the read-only memories ROM1, ROM2 feeds a sample $DATC1_i$, $DATC2_i$, respectively, into adder ADD5 and memory LOGRAM. Read-only memories ROM1 and ROM2 calculate the values $LOG\ DATC1_i$ and $-LOG\ DATC2_i$, respectively. Consequently for each set of samples a value $LQ_i$ representing the quotient signal, gets into memory LOGRAM.

In a second subsequent time period within the same FSYS-clock pulse repetition time, the samples are directly fed through buffers 35, 36 respectively, into adder ADD5 for calculating sum $S_i$ representing the sum signal, and then into a memory SUMRAM. The memories LOGRAM and SUMRAM are being read through buffers 37, 38, respectively, into data bus 31 for further processing in the computer.

Thus Fig. 3 actually shows the light detectors and their interface with a processor. In the state of the art in the field of microprocessors it appears feasible having a FSYS-clock pulse repetition time of 2 µs, a transfer velocity of the documents of 4 meters per second or 20 documents per second, and a line pattern on each document which can be fitted in a time window in the order of 2 ms, to recognize this line pattern by its relief.

**Claims**

1. Apparatus for document recognition comprising a conveyor means for continuous conveyance of documents being oriented in a predetermined direction along a predetermined path, a light source (1) an optical system for focussing a light beam (11) from the light source onto a predetermined location in a flat portion (13) of said path, two light detectors (4, 14) each of which being directed to said predetermined location, and a processing means for the light detector output signals, characterized in that said light beam (11) is incident at least substantially perpendicularly onto the predetermined location in said flat path portion (13) and in that the light detectors (4, 14) are directed to said flat path portion (13) at an angle of at least 50° to the normal, the principal axis of each of the light detectors being arranged in a plane perpendicular to said flat path portion (13) and parallel to the direction of conveyance and in that the said processing means processes the output signals of the light detectors to make up a quotient signal (Q) and a sum signal(s), and then compares the two signals to each other.

2. Apparatus according to claim 1, characterized in that underneath the said flat portion (13) in said path a light diffusing member (8) is arranged in the form of a transparent and plano-parallel plate, its cross-section according to the direction of conveyance and perpendicular to said flat path portion being an isosceles trapezium having its legs intersecting the principal axes of the respective light detectors, wherein the short face of said light diffusing member is frosted, the light beam being incident perpendicularly onto the long face of said light diffusing member.

3. Apparatus according to claim 1 or 2, characterized by an edge detector (9, 10) in said flat path portion (13), said signal processing means being arranged for control by an output signal of the edge detector in order to discriminate, when prompted by the edge detector output signal, detector output signals as effected by said light diffusing member (8), and to utilize said detector output signals for automatic signal level adjustment.

4. Apparatus according to claim 1, 2 or 3, characterized in that said light source (1) comprises a laser.

**Patentansprüche**

1. Vorrichtung zum Erkennen von Dokumenten mit einer Fördereinrichtung zum kontinuierlichen Transportieren von in einer vorbestimmten Richtung ausgerichteten Dokumenten längs eines vorbestimmten Weges, einer Lichtquelle (1), einem optischen System zum Fokussieren eines Lichtstrahls (11) von der Lichtquelle auf eine vorbestimmte Stelle in einem ebenen Abschnitt (13) des Weges, zwei Lichtdetektoren (4, 14), die jeweils auf die vorbestimmte Stelle gerichtet sind und mit einer Verarbeitungseinrichtung für die Lichtdetektorabgabesignale, dadurch gekennzeichnet, daß der Lichtstrahl (11) wenigstens etwa senkrecht auf die vorbestimmte Stelle in dem ebenen Wegabschnitt (13) einfällt, daß die Lichtdetektoren (4, 14) auf den ebenen Wegabschnitt (13) unter einem Winkel von wenigstens 50° zur Senkrechten gerichtet sind, wobei die Hauptachse jedes Lichtdetektors in einer Ebene senkrecht zum ebenen Wegabschnitt (13) und parallel zu der Förderrichtung angeordnet ist, und daß die Verarbeitungseinrichtung die Abgabesignale der Lichtdetektoren verarbeitet, um ein Quotientensignal (Q) und ein Summensignal (S) zu bilden und die dann die beiden Signale miteinander vergleicht.

2. Vorrichtung nach Anspruch 1, dadurch gekennzeichnet, daß unterhalb des ebenen Abschnitts (13) des Weges ein Lichtstreuteil (8) in Form einer transparenten und planparallelen Platte angeordnet ist, die einen Querschnitt in Förderrichtung und senkrecht zu dem ebenen Wegabschnitt in Form eines gleichschenkligen Trapezes hat, dessen Schenkel die Hauptachsen der zugeordneten Lichtdetektoren schneiden, wobei die kurze Seite des lichtstreuteils mattiert ist und der Lichtstrahl senkrecht auf die lange Seite des Lichtstreuteils auftrifft.

3. Vorrichtung nach Anspruch 1 oder 2, dadurch gekennzeichnet, daß ein Randdetektor (9, 10) in dem ebenen Wegabschnitt (13) vorgesehen ist, daß die Signalverarbeitungseinrichtung so ausgelegt ist, daß sie durch ein Abgabesignal des Randdetektors gesteuert wird, um zu unterscheiden, wenn sie durch das Randdetektorabgabesignal getrieben wird, daß die Detektorabgabesignale von dem Lichtstreuteil (8) beeinflußt sind, und um die Detektorabgabesignale zur automatischen Signalpegeleinstellung zu nutzen.

4. Vorrichtung nach Anspruch 1, 2 oder 3, dadurch gekennzeichnet, daß die Lichtquelle (1) einen Laser aufweist.

**Revendications**

1. Appareil de reconnaissance de documents comprenant des moyens convoyeurs destinés à transporter continuellement le long d'un chemin prédédeterminé des documents qui sont orientés dans une direction prédéterminée, une source lumineuse (1), un système optique destiné à focaliser un faisceau lumineux (11) provenant de la source lumineuse sur un emplacement prédéterminé une partie plane (13) du chemin précité, deux détecteurs de lumière (4, 14), chacun d'eux étant dirigé vers l'emplacement prédéterminé, et des moyens de traitement pour les signaux de sortie des détecteurs de lumière, caractérisé en ce que le faisceau lumineux (11) est projeté sous une

incidence au moins pratiquement normale sur l'emplacement prédéterminé dans la partie de chemin plane (13), et en ce que les détecteurs de lumière (4, 14) sont dirigés vers la partie de chemin plane (13) sous un angle d'au moins 50° par rapport à la normale, l'axe principal de chacun des détecteurs de lumière étant contenu dans un plan perpendiculaire à la partie de chemin plane (13) et parallèle à la direction de transport, et en ce que les moyens de traitement traitent les signaux de sortie des détecteurs de lumière de façon à élaborer un signal de quotient (Q) et un signal de somme (S), et ils comparent ensuite les deux signaux l'un à l'autre.

2. Appareil selon la revendication 1, caractérisé en ce qu'un élément diffusant la lumière (8) ayant la forme d'une lame transparente à faces planes et parallèles, est disposé sous la partie plane (13) du chemin précité, cet élément ayant une section, dans la direction de transport et perpendiculairement à la partie de chemin plane, qui a la forme d'un trapèze isocèle dont les côtés rencontrent les axes principaux des détecteurs de lumière respectifs, la face courte de cet élément diffusant la lumière étant dépolie, et le faisceau lumineux tombant sous une incidence normale sur la face longue de l'élément diffusant la lumière.

3. Appareil selon la revendication 1 ou 2, caractérisé par un détecteur de bord (9, 10) dans la partie de chemin plane (13), les moyens de traitement de signal étant conçus de façon à être commandés par un signal de sortie du détecteur de bord de façon à reconnaître, sous l'effet d'une indication fournie par le signal de sortie du détecteur de bord, des signaux de sortie de détecteur qui sont produits par l'élément diffusant la lumière (8), et à utiliser ces signaux de sortie de détecteur pour un réglage automatique de niveau de signal.

4. Appareil selon la revendication 1, 2 ou 3, caractérisé en ce que la source lumineuse (1) consiste en un laser.

FIG. 1

FIG. 2

FIG. 3